(19) Europäisches Patentamt
European Patent Office
Office européen des brevets

(11) Veröffentlichungsnummer: **0 238 992**
**B1**

(12) # EUROPÄISCHE PATENTSCHRIFT

(45) Veröffentlichungstag der Patentschrift: **23.01.91**

(51) Int. Cl.[5]: **C 08 G 18/10,** C 08 G 18/18

(21) Anmeldenummer: **87103941.8**

(22) Anmeldetag: **18.03.87**

(54) **Polyisocyanat-Zubereitungen, ein Verfahren zu ihrer Herstellung und ihrer Verwendung zur Herstellung von Polyurethan-Kunststoffen oder als lufttrocknende Beschichtungs- oder Klebemittel.**

(30) Priorität: **26.03.86 DE 3610198**

(43) Veröffentlichungstag der Anmeldung:
**30.09.87 Patentblatt 87/40**

(45) Bekanntmachung des Hinweises auf die Patenterteilung:
**23.01.91 Patentblatt 91/04**

(84) Benannte Vertragsstaaten:
**AT BE DE ES FR GB IT NL**

(56) Entgegenhaltungen:
**EP-A- 86 621**
**EP-A-0 016 673**

(73) Patentinhaber: **BAYER AG**
**D-5090 Leverkusen 1 Bayerwerk (DE)**

(72) Erfinder: **Müller, Hanns Peter, Dr.**
**Im Kerberich 6**
**D-5068 Odenthal (DE)**
Erfinder: **Jansen, Bernhard, Dr.**
**Roggendorfstrasse 65**
**D-5000 Köln 80 (DE)**
Erfinder: **Hombach, Rudolf, Dr.**
**Johann-Janssen-Strasse 24**
**D-5090 Leverkusen (DE)**

**EP 0 238 992 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft neue Polyisocyanat-Zubereitungen, die neben einer Polyisocyanat-Komponente und gegebenenfalls den üblichen Hilfs- und Zusatzmitteln ganz bestimmte tert. Amine aufweisen, ein Verfahren zu ihrer Herstellung und ihre Verwendung als Ausgangsmaterialien bei der Herstellung von Polyurethan-Kunststoffen bzw. als lufttrocknende Beschichtungs- oder Klebemittel bzw. als Bindemittel für ie Herstellung derartiger Beschichtungs- oder Klebemittel.

In der technischen Polyurethan-Chemie ist die Katalyse der Isocyant-Additionsreaktion von großer Bedeutung. Eine Literaturübersicht über die gebräuchlichen Katalysatoren und deren Wirkungsweise geben: A. Farkas und G. A. Mills, Advan. Catalysis, 13.393 (1962); J. H. Saunders und K. C. Frisch, Polyurethanes, Part. I., Wiley-Interscience, New York, 1962, Chap. VI und K. C. Frisch und L. P. Rumao, J. Macromol, Sci.-Revs. Macromol. Chem. (5/1), 103—150 (1970).

Auch die Verwendung von Polyisocyanaten bzw. von Polyisocyanat-Zubereitungen, insbesondere von freie Isocyanatgruppen aufweisenden Polyurethan-Prepolymeren als Klebemittel ist bereits seit langem bekannt und hat ebenfalls ihren Niederschlag in der Literatur gefunden: M. Dollhausen, W. Warrach, Polyurethane Adhesives Technology, Adhesives Age, June 1982, S. 28; R. Jordan, Polyurethane als Klebstoffe, Seifen, Öle, Fette, Wachse, 109 (1983), Nr. 11/12, S. 333—336; B. Kujawa-Penczek, P. Penczek, Polyurethan-Klebstoffe, Fortschritte in den 80er Jahren, Adhäsion 28 (1984), Nr. 3, S. 7—12. Außerdem können freie Isocyanatgruppen aufweisende Prepolymere als Bindemittel für lufttrocknende, d.h. unter dem Einfluß von Luftfeuchtigkeit aushärtbare Beschichtungsmittel bzw. als Bindemittel für derartige Beschichtungsmittel verwendet werden (vgl. diesbezüglich beispielsweise Becker/Braun "Kunstoff-Handbuch", Band 7, Carl-Hanser-Verlag München/Wien (1983), Seiten 545 ff.).

EP—A—86 621 beschreibt einkomponentige PU-Prepolymerstyrene für orthopedische Stütsverbände mit bis(morpholinyl)diethylether als Katalysator. Diese Systeme sind durch gute lagerstabilität gekennzeichnet.

Die offene Zeit von Klebstoffen auf Basis derartiger NCO-Prepolymerer bzw. die Topfzeit und Trockengeschwindigkeit der entsprechenden Beschichtungsmittel hängt in erster Linie vom Gehalt der Prepolymeren an Isocyanatgruppen un deren Reaktivität ab. Es ist bereits oft versucht worden, durch Zugabe eines Katalysators diese Eigenschaften einzustellen, jedoch können sich hierbei leicht Probleme bezüglich der Lagerstabilität ergeben.

Polyurethan-Prepolymere mit freien Isocyanatgruppen neigen bei der Lagerung, insbesondere falls Licht, Luftsauerstoff und Feuchtigkeit nicht völlig ausgeschlossen werden können, zu Verfärbung, zu unkontrolliertem Viskositätsanstieg und der Bildung von Festkörpern. Diese störenden Nebenreaktionen, die oftmals die Unbrauchbarkeit der Produkte nach einer gewissen Lagerzeit zur Folge haben, werden durch die üblicherweise mitverwendeten Katalysatoren beschleunigt oder oftmals erst ausgelöst.

Es war daher die der Erfindung zugrunde liegende Aufgabe, neue Polyisocyanat-Zubereitungen zur Verfügung zu stellen, die einen Katalysator enthalten, der einerseits zur Einstellung der gewünschten Reaktivität der Zubereitungen geeignet ist und der andererseits die Lagerstabilität der Zubereitungen weniger stark beeinträchtigt als die bislang eingesetzten Katalysatoren.

Diese Aufgabe konnte durch die Bereitstellung der nachstehend näher beschriebenen erfindungsgemäßen Zubereitungen gelöst werden. Die erfindungsgemäßen Zubereitungen sind durch das Vorliegen bestimmter aminischer Katalysatoren der nachstehend näher beschriebenen Art gekennzeichnet. Die besondere Eignung dieser speziellen Amine zur Lösung der gestellten Aufgabe war überraschend, da erwartet werden mußte, daß die erfindungsgemäßen Katalystoren sich wie Amingestartete d.h. tertiäre Aminogruppen aufweisende Polyetherpolyole verhalten, so daß die Lagerstabilität der die erfindungswesentlichen Katalysatoren enthaltenden Zubereitungen mit der Lagerstabilität von NCO-Prepolymeren auf Basis von tert. Stickstoffatome aufweisenden Polyetherpolyolen entspricht. Überraschenderweise ist dies jedoch nicht der Fall, da die erfindungsgemäßen Zubereitungen eine weit bessere Lagerstabilität aufweisen als entsprechende Zubereitungen auf Basis der genannten tert. Stickstoff aufweisenden Polyetherpolyole.

Gegenstand der Erfindung sind Polyisocyanat-Zubereitungen bestehend aus

a) mindestens einem organischen Polyisocyanat,

b) mindestens einem gelöst vorliegenden Katalysator und gegebenenfalls

c) weiteren Hilfs- und Zusatzmitteln,

dadurch gekennzeichnet, daß es sich bei der Komponente b) um Verbindungen der allgemeinen Formel

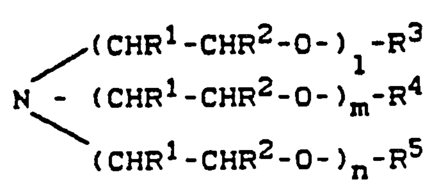

handelt, wobei

$R^1$ und $R^2$ für gleiche oder verschiedene Reste stehen, Wasserstoff oder eine Methylgruppe bedeuten, mit der Maßgabe, daß $R^1$ und $R^2$ nicht gleichzeitig für eine Methylgruppe stehen,

$R^3$, $R^4$ und $R^5$ für gleiche oder verschieden, bezüglich der Isocyanat-Additionsreaktion inerte organische Reste stehen

und

l, m und n für gleiche oder verschiedene ganze Zahlen von 1 bis 5 stehen.

Gegenstand der Erfindung ist auch ein Verfahren zur Herstellung dieser Polyisocyanat-Zubereitungen, welches dadurch gekennzeichnet ist, daß man die Komponenten a), b) und gegebenenfalls c) miteinander vermischt.

Gegenstand der Erfindung ist auch die Verwendung der erfindungsgemäßen Polyisocyanat-Zubereitungen als Polyisocyanat-Komponente bei der Herstellung von Polyurethan-Kunststoffen nach dem Isocyanat-Polyadditionsverfahren.

Gegenstand der Erfindung ist schließlich auch die Verwendung der erfindungsgemäßen Polyisocyanat-Zubereitungen als unter dem Einfluß von Feuchtigkeit aushärtbare Beschichtungs- oder Klebemittel oder als Bindemittel bei der Herstellung derartiger Beschichtungs- oder Klebemittel.

Die Komponente a) der erfindungsgemäßen Polyisocyanat-Zubereitung besteht aus mindestens einem organischen Polyisocyanat, d.h. aus beliebigen Verbindungen bzw. Gemischen von Verbindungen, die pro Molekül mindestens zwei organisch gebundene Isocyanatgruppen aufweisen.

Hierzu gehören sowohl niedermolekulare Polyisocyanate mit einem unter 400 liegenden Molekulargewicht als auch Modifizierungsprodukte derartiger niedermolekularer Polyisocyanate mit einem aus der Funktionalität und dem Gehalt an funktionellen Gruppen berechenbaren, zwischen 400 und 10.000, vorzugsweise 600 und 8.000 und insbesondere 800 bis 5.000, liegenden Molekulargewicht. Geeignete niedermolekulare Polyisocyanate sind beispielsweise solche der Formel

$$Q\,(NCO)_n,$$

in der

n = 2 bis 4, vorzugsweise 2,

und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugweise 6 bis 13 C-Atomen, oder einen araliphatischen Kohlenwasserstoffrest mit 8 bis 15, vorzugsweise 8 bis 13 C-Atomen,

bedeuten.

Geeignete derartige niedermolekulare Polyisocyanate sind z.B. Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Hexahydro-1,3-und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat oder Polyphenyl-polymethylenpolyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei genüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200 wie z.B. Ethylenglykol, Trimethylolpropan, Propandiol-1,2 oder Butandiol-1,2, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete

Verbindungen mit gegenüber Isocyanatgruppen reaktionsfähigen Gruppen, insbesondere Hydroxylgruppen, sind beispielsweise die in US—PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von ca. 1,5:1 bis 20:1, vorzugsweise 5:1 bis 15:1 zur Umsetzung gebracht. Die NCO-Prepolymeren Weisen im allgemeinen einen NCO-Gehalt von 2,5 bis 25, vorzugsweise 6 bis 20 Gew.-% auf. Hieraus geht bereits hervor, daß im Rahmen der vorliegen Erfindung unter "NCO-Prepolymeren" bzw. unter "Prepolymeren mit endstädingen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Für das erfindungsgemäße Verfahren besonders bevorzugte Polyisocyanatkomponenten a) sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanatodicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Bei der erfindungswesentlichen Katalysatorkomponente b) handelt es sich um tert. Amine der bereits oben genannten allgemeinen Formel. Vorzugsweise werden solche tert. Amine der genannten Formel eingesetzt, für welche

$R^1$ und $R^2$ für Wasserstoff stehen,

$R^3$, $R^4$ und $R^5$ für gleiche Alkylreste mit 1 bis 4 Kohlenstoffatomen stehen und

l, m und n für gleiche oder verschiedene ganze Zahlen von 1 bis 3 stehen.

Besonders bevorzugt wird die Verbindung der Formel

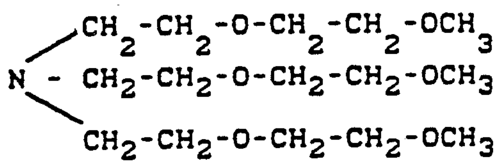

als erfindungsgemäße Komponente b) eingesetzt.

Die Herstellung der erfindungswesentlichen Katalysatoren erfolgt entweder durch Alkoxylierung von Ammoniak unter Verwendung von Ethylenoxid und/oder von Propylenoxid, vorzugsweise von Ethylenoxid als alleinigem Alkylenoxid und Veretherung der so erhaltenen trifunktionellen Aminoalkohole in an sich bekannter Weise, beispielsweise durch Umsetzung mit Alkylhalogeniden wie z.B. Methyljodid oder durch entsprechende Alkoxylierung eines einwertigen Alkohols $R^3$-OH bzw. eines Gemischs von unterschiedlichen Alkoholen $R^3$-OH, $R^4$-OH und $R^5$-OH (wobei entsprechend der oben gemachten Definition von $R^3$, $R^4$ und $R^5$ auch zwei der genannten Alkohole gleich sein können) und anschließende Umsetzung der resultierenden einwertigen Etheralkohole mit Ammoniak, bespielsweise in Gegenwart von Raney-Nickel als Katalysator wie z.B. von Gérard Soula in J. Org. Chem. (1985), *50*, 3717—3721 beschrieben.

Bei der letztgenannten Herstellung der erfindungswesentlichen Katalysatoren können als einwertige Alkohole, die als Starter für die Alkoxylierungsreaktion verwendet werden, beliebige organische Verbindungen eingesetzt werden, die eine alkoholische Hydroxylgruppe aufweisen, von dieser Hydroxylgruppe abgesehen keine weiteren Zerewitinoffaktiven Wasserstoffatome aufweisen und bezüglich der Isocyanat-Additionsreaktion keine katalytisch wirksamen Gruppierungen wie beispielsweise tert. Aminstickstoffatome, Carboxylatgruppen und Metallatome aufweisen. Dementsprechend bedeutet im Rahmen der Erfindung "bezüglich der Isocyanat-Additionsreaktion inert" die Abwesenheit von Zerewitinoff-aktiven Wasserstoffatomen und die Abwesenheit von, die Reaktivität von Isocyanatgruppen beschleunigenden oder verzögernden, Zentren. Geeignete Starter sind beispielsweise einfache Alkohole wie Methanol, Ethanol, n-Propanol, n-Butanol, Isopropanol, Isobutanol, 2-Hydroxyethyl-acetat, Ethylenglykolmonomethylether, Diethylenglykolmonomethylether u. dgl. Grundsätzlich ist es auch möglich, bei dieser Herstellung der erfindungswesentlichen Katalysatoren als Starter Phenole wie beispielsweise Phenol, Cresole oder Naphthole zu verwenden, obwohl dies weniger bevorzugt ist. Die Startermoleküle weisen im allgemeinen ein zwischen 32 und 200 liegendes Molekulargewicht auf. Besonders bevorzugt werden die genannten einfachen Alkanole, ganz besonders bevorzugt Methanol, verwendet.

Die erfindungswesentlichen Katalysatoren b) liegen in den erfindungsgemäßen Polyisocyanat-Zubereitungen in Mengen von 0,01 bis 10, vorzugsweise 0,5 bis 8 Gew.-%, bezogen auf das Gewicht der Polyisocyanatkomponente a) vor.

Bei den gegebenenfalls in den erfindungsgemäßen Polyisocyanat-Zubereitungen vorliegenden Hilfs- und Zusatzstoffen c) handelt es sich um die in der Polyurethanchemie an sich bekannten Substanzen.

Geeignete Komponenten c) sind beispielsweise die aus der Klebstoff- und Lacktechnologie bekannten Lösungsmittel wie z.B. Toluol, Xylol, Ethylacetat, Butylacetat, Methylethylketon, Methylisobutylketon, Ethylenglykol, Monoethyletheracetat oder beliebige Gemische derartiger Lösungsmittel. Weitere Komponenten c) sind beispielsweise Pigmente, Füllstoffe oder Verlaufhilfsmittel.

Zur Herstellung der erfindungsgemäßen Polyisocyanat-Zubereitungen werden die Komponenten a), b) und gegebenenfalls c) gleichzeitig oder in beliebiger Reihenfolge miteinander vermischt.

Die so erhaltenen, erfindungsgemäßen Polyisocyanat-Zubereitungen eignen sich als Polyisocyanatkomponente bei der Herstellung von Polyurethan-Kunststoffen nach dem Isocyanat-Polyadditionsverfahren. So können die erfindungsgemäßen Polyisocyanat-Zubereitungen beispielsweise zur Herstellung von Polyurethanschaumstoffen oder von Polyurethanelastomeren verwendet werden. Besonders bevorzugt werden die erfindungsgemäßen Polyisocyanat-Zubereitungen jedoch als unter dem Einfluß von Feuchtigkeit aushärtbare Einkomponenten-Klebemittel oder -Beschichtungsmittel bzw. als Bindemittel für derartige Klebe- bzw. Beschichtungsmittel verwendet. Diese Einkomponenten-Systeme weisen eine sehr gute Lagerstabilität auf und können bezüglich ihrer offenen Zeit (Klebemittel) bzw. bezüglich ihrer Verarbeitungszeit und Trocknungsgeschwindigkeit (Beschichtungsmittel) durch Variation der Konzentration der erfindungswesentlichen Katalysatoren b) auf einfache Weise den jeweiligen Bedürfnissen angepaßt werden.

In den nachfolgenden Beispielen beziehen sich alle Prozentangaben auf Gewichtsprozente und alle Angaben "Teilen" auf Gewichtsteile.

## Beispiele

### Beispiel 1a (Vergleich)

100 Teile eines technischen Polyphenyl-polymethylen-polyisocyanates, erhalten durch Phosgenierung eines Anilin-Formaldehyd-Kondensates ($\eta_{25°C}$ = 20.000 mPas; NCO-Gehalt = 31%) (Roh-MDI), werden mit 32,2 Teilen propoxyliertem Triethanolamin (OH-Zahl = 150 mg KOH/g) zu einem Prepolymer mit 20,2% NCO-Gehalt und einer Viskosität von $\eta_{25°C}$ = 20.000 mPas umgesetzt. Der Gehalt des NCO-Prepolymeren an tert. Aminstickstoff liegt bei 0,3%.

### Beispiel 1b (erfindungsgemäß)

100 Teile des Polyisocyanats gemäß Beispiel 1a werden mit 32,2 Teilen propoxyliertem Trimethylolpropan (OH-Zahl = 150 mg KOH/g) zu einem NCO-Prepolymer mit einem NCO-Gehalt von 20% und einer Viskosität bei 25°C von 13 640 mPas umgesetzt. Dem Prepolymer werden dann 10 Teile des erfindungsgemäßen Katalysators der Formel

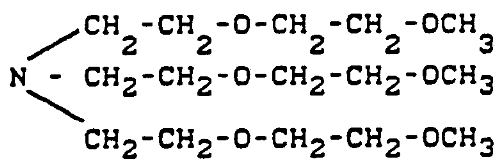

zugesetzt. Die so erhaltene Polyisocyanat-Zubereitung weist einen Gehalt an tert. Aminstickstoff von 0,3% auf.

### Beispiel 2

(Vergleich der Lagerstabilitäten der Polyisocyanat-Zubereitungen aus den Beispielen 1a und 1b)

Zur Bestimmung der Lagerstabilität werden die zu untersuchenden Substanzen in kleine Flaschen abgefüllt und so lange bei 80°C temperier aufbewahrt, bis die Substanz nicht mehr fließfähig ist.

Die ermittelten Werte sind:

Polyisocyanat-Zubereitung Beispiel 1a = 255 h

Polyisocyanat-Zubereitung Beispiel 1b = 300 h

### Beispiel 3

(Herstellung eines NCO-Prepolymeren)

500 Teile des Polyisocyanats gemäß Beispiel 1a werden vorgelegt und auf 60°C erwärmt. Anschließend werden 500 g eines Polypropylenglykols des Molekulargewichts 2000 so zugesetzt, daß die Temperatur 65°C nicht überschreitet. Nach Beendigung der Zugabe wird bei 60°C so lange gerührt, bis der NCO-Gehalt 13,2% beträgt. Das so erhaltene NCO-Prepolymer weist bei 25°C eine Viskosität von 8000 mPas auf.

Beispiel 4

(Klebstoffabmischungen aus dem Prepolymer gemäß Beispiel 3)

In 5 Parallelversuchen a) bis e) werden unter Verwendung des in Beispiel 3 beschriebenen NCO-Prepolymeren und unter Verwendung unterschiedlicher Mengen des erfindungsgemäßen Katalysators gemäß Beispiel 1b) Klebstoffabmischungen hergestellt.

Die Aushärtezeit der jeweiligen Abmischung wurde durch Aufrakeln einer kleinen Substanzmenge als 0,2 mm starker Film auf eine Glasplatte bestimmt. Die Aushärtung erfolgte in einer Klimakammer bei 23°C und einer relativen Luftfeuchtigkeit von 50%.

Folgende Tabelle gibt Aufschluß über die ermittelten Werte:

| Lfd.-Nr. | % Katalysator | Zeit bis zum klebfreien Zustand |
|---|---|---|
| a | 0,01 | nach Tagen |
| b | 1 | 70 Min. |
| c | 2 | 38 Min. |
| d | 3 | 30 Min. |
| e | 4 | 20 Min. |

Beispiel 5

648,8 Teile 4,4'-Diisocyanatodiphenylmethan, welches durch Carbodiimidisierung eines Teils der Isocyanatgruppen verflüssigt worden ist, und welches einen NCO-Gehalt von 28% aufweist, werden mit 192,4 Teilen Polypropylenglykol der OH-Zahl 112 und 128,2 Teilen eines durch Propoxylierung von Glycerin hergestellten Polyetherpolyols der OH-Zahl 250 zu einem NCO-Prepolymer umgesetzt. Anschließend werden dem so erhaltenen NCO-Prepolymer 45,28 Teile des erfindungsgemäßen Katalysators gemäß Beispiel 1b) und 0,49 Teile Benzoylchlorid zugesetzt.

Die so erhaltene Polyisocyanat-Zubereitung weist einen NCO-Gehalt von 13,5%, eine Viskosität bei 25°C von 35.137 mPas und einen Gehalt an tert. Aminstickstoff von 0,19% auf.

Die Polyisocyanat-Zubereitung eignet sich als Klebemittel, welches unter dem Einfluß von Luftfeuchtigkeit aushärtet.

**Patentansprüche**

1. Polyisocyanat-Zubereitungen, bestehend aus

a) mindestens einem organischen Polyisocyanat,

b) mindestens einem gelöst vorliegenden Katalysator und gegebenenfalls

c) weiteren Hilfs- und Zusatzmitteln,

dadurch gekennzeichnet, daß es sich bei der Komponente b) um Verbindungen der allgemeinen Formel

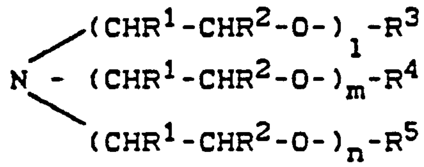

handelt, wobei

$R^1$ und $R^2$ für gleiche oder verschiedene Reste stehen, Wasserstoff oder eine Methylgruppe bedeuten, mit der Maßgabe, daß $R^1$ und $R^2$ nicht gleichzeitig für eine Methylgruppe stehen,

$R^3$, $R^4$ und $R^5$ für gleiche oder verschieden, bezüglich der Isocyanat-Additionsreaktion inerte organische Reste stehen

und

l, m und n für gleiche oder verschiedene ganze Zahlen von 1 bis 5 stehen.

2. Polyisocyanat-Zubereitung gemäß Anspruch 1, gekennzeichnet durch einen Gehalt von 0,01 bis 10 Gew.-% der Komponente b), bezogen auf die Komponente a).

3. Polyisocyanat-Zubereitung gemäß Anspruch 1 und 2, dadurch gekennzeichnet, daß die Polyisocyanatkomponente a) ein endständige Isocyanatgruppen aufweisendes Prepolymer mit einem mittleren Molekulargewicht von 400 bis 10.000 und einem Gehalt an Isocyanatgruppen von 2,5 bis 25 Gew.-% darstellt.

4. Polyisocyanat-Zubereitung gemäß Anspruch 1 bis 3, dadurch gekennzeichnet, daß die Komponente b) ein tertiäres Amin der in Anspruch 1 genannten Formel darstellt, wobei $R^1$ und $R^2$ jeweils für Wasserstoff, $R^3$, $R^4$ und $R^5$ für gleiche oder verschiedene Alkylreste mit 1 bis 4 Kohlenstoffatomen und l, m und n für gleiche oder verschiedene ganze Zahlen von 1 bis 3 stehen.

5. Polyisocyanat-Zubereitung gemäß Anspruch 1 bis 4, dadurch gekennzeichnet, daß die Komponente b) ein tertiäres Amin der Formel

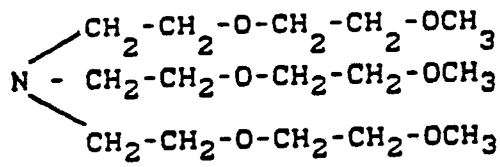

darstellt.

6. Verfahren zur Herstellung der Polyisocyanat-Zubereitungen gemäß Anspruch 1 bis 5, dadurch gekennzeichnet, daß man die Komponenten a), b) und gegebenenfalls c) miteinander vermischt.

7. Verwendung der Polyisocyanat-Zubereitung gemäß Anspruch 1 bis 5 als Polyisocyanat-Komponente bei der Herstellung von Polyurethan-Kuntstoffen nach dem Isocyanat-Polyadditionsverfahren.

8. Verwendung der Polyisocyanat-Zubereitung gemäß Anspruch 1 bis 5 als unter dem Einfluß von Feuchtigkeit aushärtbare Beschichtungs- oder Klebemittel oder als Bindemittel bei der Herstellung derartiger Beschichtungs- oder Klebemittel.

**Revendications**

1. Préparations de polyisocyanate(s) constituées de
a) au moins un polyisocyanate organique;
b) au moins un catalyseur présent à l'état dissous et éventuellement
c) d'autres agents auxiliaires et d'addition,
caractérisées par le fait qu'en ce qui concerne le constituant b), il s'agit de composés répondant à la formule générale

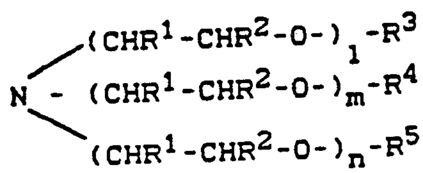

dans laquelle
$R^1$ et $R^2$ sont identiques ou différents et représentent un atome d'hydrogène ou un groupe méthyle, avec cette réserve que $R^1$ et $R^2$ ne représentent pas simultanément un groupe méthyle.
$R^3$, $R^4$ et $R^5$ sont identiques ou différents et représentent des radicaux organiques inertes vis-à-vis de la réaction d'addition d'isocyanates et
l, m et n sont identiques ou différents et représentent des chiffres de 1 à 5.

2. Préparation de polyisocyanate(s) selon la revendication 1, caractérisée par une teneur de 0,01 à 10% en poids du constituant b) rapporté sur le constituant a).

3. Préparation de polyisocyanate(s) selon les revendications 1 et 2, caractérisée en ce que le constituant polyisocyanate a) représente un prépolymère présentant des groupes isocyanates terminaux et ayant un poids moléculaire moyen de 400 à 10.000, ainsi qu'une teneur en groupes isocyanates de 2,5 à 25% en poids.

4. Préparation de polyisocyanate(s) selon les revendications 1 à 3, caractérisée en ce que le constituant b) représente une amine tertiaire répondant à la formule mentionnée dans la revendication 1; $R^1$ et $R^2$ représentent chacun un atome d'hydrogène; $R^3$, $R^4$ et $R^5$ représentent des radicaux alkyle identiques ou différents contenant un à quatre atomes de carbone, et 1, m et n représentent des entiers identiques ou différents de 1 à 3.

5. Préparation de polyisocyanate(s) selon les revendications 1 à 4, caractérisée en ce que le constituant b) représente une amine tertiaire de formule

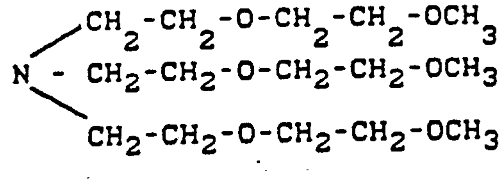

6. Procédé pour la mise en oeuvre de la préparation de polyisocyanate(s) selon les revendications 1 à 5, caractérisé en ce qu'on mélange intimement les constituants a, b) et éventuellement c).

7. Utilisation des préparations de polyisocyanate(s) selon les revendications 1 à 5, comme constituant polyisocyanate dans la préparation de matières synthétiques de polyuréthanne selon le procédé de polyaddition d'isocyanates.

8. Utilisation des préparations de polyisocyanate(s) selon les revendications 1 à 5, comme adhésifs ou agents d'enduction durcissables sous l'influence de l'humidité ou comme agents liants intervenant dans la préparation d'adhésifs ou d'agents d'enduction de ce type.

**Claims**

1. Polyisocyanate preparations consisting of
a) at least one organic polyisocyanate,
b) at least one dissolved catalyst and, optionally,
c) other auxiliaries and additives,
characterized in that component b) is selected from compounds corresponding to the following general formula

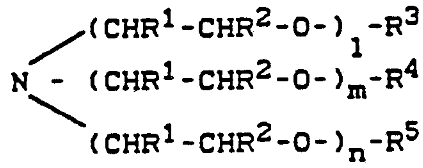

in which
$R^1$ and $R^2$ may be the same or different and represent hydrogen or a methyl group, with the proviso that $R^1$ and $R^2$ cannot both represent a methyl group.
$R^3$, $R^4$ and $R^5$ may be the same or different and represent organic radicals inert to the isocyanate addition reaction and
l, m and n may be the same or different and represent integers of 1 to 5.

2. A polyisocyanate preparation as claimed in claim 1, characterized by a content of 0.01 to 10% by weight of component b), based on component a).

3. A polyisocyanate preparation as claimed in claims 1 and 2, characterized in that the polyisocyanate component a) is an isocyanate terminated prepolymer having an average molecular weight of 400 to 10,000 and a content of isocyanate groups of 2.5 to 25% by weight.

4. A polyisocyanate preparation as claimed in claims 1 to 3, characterized in that component b) is a tertiary amine corresponding to the formula in claim 1 in which $R^1$ and $R^2$ each represent hydrogen, $R^3$, $R^4$ and $R^5$ may be the same or different and represent alkyl radicals containing 1 to 4 carbon atoms and l, m and n may be the same or different and represent integers of 1 to 3.

5. A polyisocyanate preparation as claimed in claims 1 to 4, characterized in that component b) is a tertiary amine corresponding to the formula

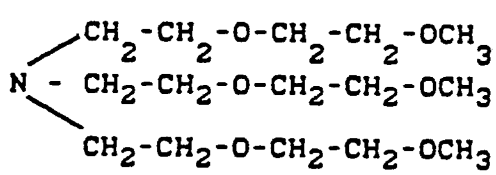

6. A process for the production of the polyisocyanate preparations claimed in claims 1 to 5, characterized in that components a), b) and optionally c) are mixed with one another.

7. The use of the polyisocyanate preparations claimed in claims 1 to 5 as polyisocyanate component in the production of polyurethane plastics by the isocyanate polyaddition process.

8. The use of the polyisocyanate preparations claimed in claims 1 to 5 as moisture-curing coating compounds or adhesives or as binders in the production of such coating compounds or adhesives.